# FASCICULE DE BREVET EUROPEEN

(11) **EP 1 008 415 B1**
(45) Date de publication et mention de la délivrance du brevet: **17.09.2003**
(21) Numéro de dépôt: 99402814.0
(22) Date de dépôt: 12.11.1999
(51) Int. Cl.: B23K 9/127

(54) **Installation de coupage de metaux munie d'une torche de coupage et d'une sonde capacitive de palpage**
Schneidanlage von metallischen Werkstücken mit einem Schneidbrenner und einem daran angeordneten kapazitiven Sensor
Cutting device for metallic workpieces comprising a cutting gun and a capacitive sensor

(30) Priorité: 10.12.1998 FR 9815593
(43) Date de publication de la demande: 14.06.2000
(73) Titulaire: Safmatic, 79201 Parthenay Cedex (FR)
(72) Inventeur: Billerot, Francis, 79450 Saint-Aubin-le-Cloud (FR)
(74) Mandataire: Pittis, Olivier

(56) Documents cités:
- US-A- 3 017 496
- KARL HEINZ SCHMALL: "Sensoren für Schweis- und Schneidvorgänge" AUTOMOBIL-INDUSTRIE, no. 4, 1982, pages 435-442, XP002113684

## Description

L'invention concerne une machine de travail, en particulier de coupage, de pièces métalliques mettant en oeuvre, d'une part, une torche de travail, en particulier un chalumeau ou une torche de coupage plasma, et, d'autre part, d'une sonde capacitive de palpage utilisée pour déterminer et réguler la distance séparant ladite torche de la pièce à travailler, en particulier à couper.

Habituellement, lorsqu'on souhaite effectuer un coupage ou un soudage d'une ou plusieurs pièces métalliques au moyen d'une machine automatique comportant une torche de travail, telle une torche de soudage ou de coupage, de disposer d'un système de contrôle et régulation de la distance séparant la torche de la pièce à couper ou à souder.

L'opération visant à déterminer et à ajuster la distance outil/pièce est couramment appelée palpage.

Actuellement, les systèmes de palpage utilisés équipant les installations de coupage incorporant un chalumeau ou une torche automatique de coupage plasma sont des capteurs en forme d'anneaux appelés sondes capacitives.

Pendant leur fonctionnement, ces systèmes ne nécessitent pas de contact direct entre le détecteur et la tôle ou la pièce métallique à travailler, notamment à couper.

En effet, le mode de fonctionnement de ce type de sonde capacitive est basé sur une détermination de la valeur de capacité existant dans l'espace ou intervalle séparant la sonde capacitive de la tôle à travailler.

Après détermination, la valeur de capacité est transmise à un système électronique de pilotage qui tient compte de cette valeur de capacité pour commander un dispositif d'asservissement permettant de déplacer la torche et la sonde capacitive fixée sur celle-ci, c'est-à-dire l'ensemble torche/sonde capacitive, dans un plan sensiblement parallèle au plan de la pièce à travailler, en conservant une valeur de capacité sensiblement constante et donc une distance également constante entre la torche et la pièce à travailler.

Un tel système est décrit dans "Automobil-Industrie" - Nº 4, 1982, pages 435-438, un article de Karl-Heinz Schmall. Le préambule de la revendication 1 est basé sur un tel système.

En d'autres termes, un dispositif de palpage pour machine automatique de coupage ou de soudage de métaux comporte, en général, une sonde capacitive, habituellement en forme d'anneau, fixée à la torche, et un câble électrique de connexion permettant la liaison entre la sonde capacitive et les moyens de pilotage.

Or, afin de pouvoir maintenir une distance sensiblement constante entre l'outil, c'est-à-dire, la torche et la pièce métallique, il est nécessaire que la valeur de capacité de la sonde capacitive ne soit pas perturbée, durant son fonctionnement, par des variations des capacités parasites et ce, malgré l'environnement hostile, à savoir, notamment, la température élevée, la fumée générée et les projections de métal en fusion.

En effet, la valeur de la capacité régnant entre la sonde capacitive et la pièce à découper est seulement de quelques picofarads, ce qui est une valeur très faible.

Or, la valeur de la capacité parasite d'un câble de connexion ou de liaison est habituellement 10 à 100 fois supérieure à celle de la mesure utile et ce, même lorsqu'on prend soin d'utiliser des câbles coaxiaux spéciaux, c'est-à-dire des câbles à très faible capacité intrinsèque.

On comprend donc aisément que réaliser une mesure de capacité dans ces conditions n'est pas chose aisée.

En outre, durant une opération de coupage la sonde capacitive reçoit souvent, au moment de l'amorçage de la découpe, des scories de métal en fusion qui peuvent se fixer sur celle-ci en engendrant alors une variation intempestive de la valeur de la capacité et donc un déplacement non désiré de la torche par rapport à la pièce, duquel déplacement il peut résulter une baisse notable des qualités de la coupe, par exemple une adhérence indésirable de scories sur les bords de la saignée, une largeur et/ou une rectitude inappropriées ou inadéquates de la saignée de coupe.

Par ailleurs, la sonde capacitive et son câble de connexion subissent habituellement aussi des variations de température assez importantes qui engendrent un changement des caractéristiques de leur diélectrique et donc, de manière analogue, une variation de la valeur de capacité et, par-là même, de la hauteur de palpage.

Le problème qui se pose est donc de pouvoir disposer d'un système de mesure fiable et précis de la valeur de capacité ne présentant pas les inconvénients susmentionnés, c'est-à-dire de pouvoir proposer un système de palpage efficace qui ne soit pas affecté, en particulier, par les capacités parasites engendrées par les câbles de connexion ou analogues.

La présente invention concerne alors une installation de travail, en particulier de coupage ou de soudage, d'au moins une pièce métallique, comprenant :
- au moins un bâti-support muni d'au moins une torche de travail mobile;
- au moins un dispositif de palpage comportant au moins une sonde capacitive et des moyens de pilotage;
- un premier moyen de connexion longiligne et électriquement conducteur connecté par une extrémité amont auxdits moyens de pilotage et par une extrémité aval à ladite sonde capacitive, caractérisée en ce qu'elle comporte, en outre, :
- un deuxième moyen de connexion longiligne et électriquement conducteur, connecté par son extrémité amont auxdits moyens de pilotage et dont l'extrémité aval est libre.

Selon le cas, l'installation selon l'invention comprend l'une ou plusieurs des caractéristiques suivantes :
- lesdits premier et deuxième moyens de connexion présentent approximativement les mêmes propriétés ou caractéristiques de diélectrique, c'est-à-dire que le diélectrique du premier moyen de connexion est approximativement égal ou équivalent au diélectrique du deuxième moyen de connexion.
- le premier moyen de connexion a une première longueur L1 et le deuxième moyen de connexion a une deuxième longueur L2, lesdites première et deuxième longueurs L1, L2 étant sensiblement égales ;
- les première et deuxième longueurs L1, L2 sont comprise entre 20 cm et 150 cm ;
- les premier et deuxième moyens de connexion sont séparés d'une distance D comprise entre environ 2 mm et environ 30 mm;
- lesdits premier et deuxième moyens de connexion sont constitués d'un même matériau et/ou ont une même section ;
- les premier et deuxième moyens de connexion sont choisis parmi les câbles et les tiges métalliques, de préférence les premier et deuxième moyens de connexion sont deux tiges métalliques parallèles ;
- au moins une partie desdits premier et deuxième moyens de connexion est placée à l'intérieur d'une enveloppe de protection, de préférence un tube métallique de protection ;
- la sonde capacitive est fixée à la torche de coupage ou de soudage, de préférence par l'intermédiaire d'une articulation ou d'une pièce flexible ;
- la torche est choisie parmi les torches de coupage laser, les torches de coupage plasma ou les chalumeaux d'oxycoupage.

En outre, l'invention concerne également un ensemble monobloc susceptible de constituer un dispositif de palpage tel que susmentionné.

L'invention va maintenant être décrite plus en détail à l'aide de deux mode de réalisation, donnés à titre illustratif mais non limitatif, et en référence aux figures annexées.

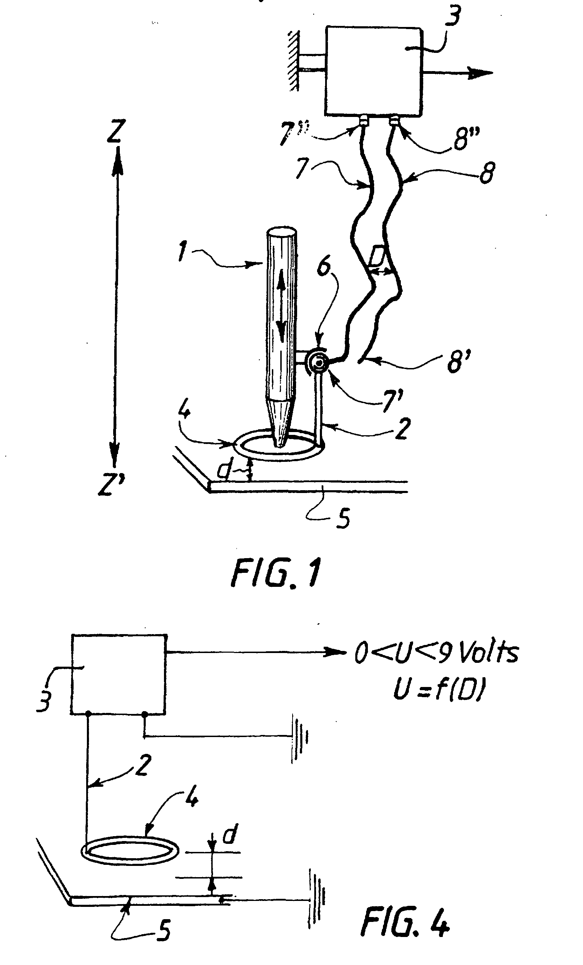

La figure 1 représente le schéma d'un premier mode de réalisation d'une installation selon l'invention, laquelle comprend une torche de coupage 1 mobile selon un axe vertical (z,z') et munie d'un dispositif de palpage comportant, d'une part, une sonde capacitive 2 de palpage et, d'autre part, de moyens de pilotage 3 comprenant un boîtier électronique, c'est-à-dire une commande de hauteur d séparant la torche 1 de la surface supérieure de la pièce métallique à travailler, et un système de contrôle classique agissant sur un système de déplacement motorisé permettant de déplacer la torche 1 jusqu'à ce que la sonde 2 liée à la torche 1 mesure la valeur de capacité souhaitée représentant la hauteur d désirée et fixée par la commande de hauteur.

Comme on le voit sur la figure 1, la sonde 2 capacitive comporte une partie d'extrémité en forme d'anneau 4 entourant l'extrémité aval de la torche 1, c'est-à-dire l'extrémité de la torche 1 la plus proche de la pièce 5 à couper.

La sonde 2 est fixée à la torche 1 par l'intermédiaire d'une articulation 6 telle que l'extrémité aval de la torche 1 puisse venir se positionner dans l'anneau 4.

Un premier câble 7 de liaison est fixé par son extrémité aval 7' à la sonde 2 capacitive et par son extrémité amont 7" au boîtier électronique 3.

De manière analogue, un deuxième câble 8, de préférence parallèle au premier câble 7, a, quant à lui, son extrémité amont 8" également reliée au boîtier électronique 3 et son extrémité aval 8' libre.

Par parallèle, on entend que la distance D séparation les deux câbles 7 et 8 est sensiblement constante, mais que les deux câbles 7 et 8 ne sont pas forcément rectilignes.

Selon la présente invention, on choisit deux câbles 7 et 8 présentant des propriétés de diélectrique respectives identiques ou très voisines l'une de l'autre, de préférence identiques l'une à l'autre.

De préférence, la distance D séparant le premier câble 7 du deuxième câble 8 est de l'ordre de 20 à 50 mm, de préférence de l'ordre de 30 mm, de manière à ce que les deux câbles 7 et 8 soient dans le même environnement local de travail, c'est-à-dire soumis aux mêmes contraintes.

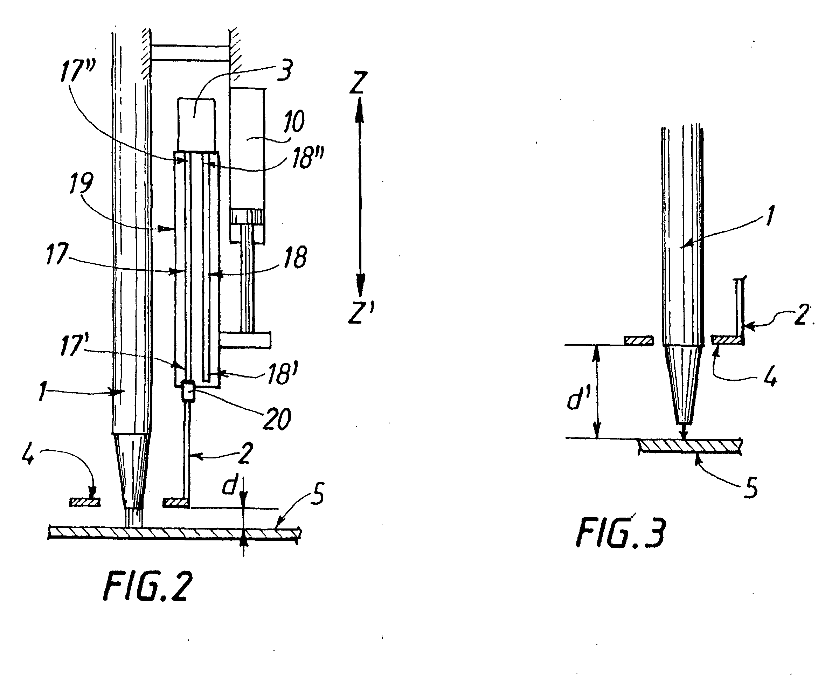

La figure 2 représente un deuxième mode de réalisation d'une installation selon l'invention, en tout point analogue à la figure L, à l'exception du fait que, selon la figure 2, les premier et deuxième câbles 7 et 8 souples de la figure 1 ont été remplacés par deux tiges métalliques 17 et 18.

Plus précisément, la première tige 17 permet de relier la sonde capacitive 2 au boîtier électronique 3, alors que la deuxième tige métallique 18 n'est reliée que par son extrémité amont au boîtier 3, son extrémité aval étant libre.

Les deux tiges métalliques 17 et 18 sont, par ailleurs, placées en parallèles à l'intérieur d'une enveloppe de protection, tel un tube métallique 19, qui sert d'écran à tout élément extérieur pouvant faire varier la capacité de l'une ou l'autre desdites tiges 17 et 18.

De préférence, les tiges 17 et 18 présentent les mêmes caractéristiques de diélectrique, c'est-à-dire qu'on choisit des tiges 17 et 18 sensiblement identiques, à savoir des tiges de même matériau, par exemple des tiges en acier inoxydable.

En d'autres termes, les tiges 17 et 18 forment, avec le tube 19, deux capacités sensiblement identiques et subissant des variations très similaires en fonction des variations de l'environnement local, notamment les contraintes de température, d'humidité, de composition de l'atmosphère...

Par exemple, lorsque la température ambiante varie, la température des deux tiges 17 et 18 varie de manière analogue, ce qui a pour conséquence de ne pas perturber la mesure de capacité, puisque les valeurs de capacités respectives de chacune des deux tiges 17 et 18 varient de la même manière et en parallèle par rapport au tube 19.

En outre, on voit sur la figure 2 que, selon ce mode de réalisation, la sonde capacitive 2 est fixée à l'extrémité aval de la tige métallique 17 par l'intermédiaire d'une pièce 20 métallique flexible, de manière à éviter les capacités parasites et autres problèmes de contact électrique.

Par ailleurs, on voit également que les moyens de pilotage, c'est-à-dire l'électronique de mesure, sont insérés dans un boîtier 3 électronique, lequel boîtier 3 électronique est directement fixé au-dessus des deux tiges métalliques 17 et 18, ce qui permet là encore, d'éviter ou de minimiser les capacités parasites et autres problème de contact électrique.

De préférence, l'ensemble constitué par la sonde 2 capacitive, les tiges métalliques 17 et 18 et le boîtier électronique 3 est fixé sur un système 10 de montée et descente selon l'axe (z,z'), par exemple un système par vérin pneumatique permettant d'éloigner la sonde capacitive 2 de la tôle 5 à découper au moment de l'amorçage de la coupe et éviter ainsi que la sonde 2 capacitive ne soit détériorée ou perturbée par des projections de scories.

En d'autres termes, lors de l'amorçage le système 10 est commandé pour provoquer un éloignement momentané de l'anneau 4 de la tôle à découper ; le dispositif de palpage étant, quant à lui, momentanément immobilisé, ainsi que schématisé sur la figure 3.

Ainsi, on peut constater, en comparant les figures 2 et 3, que l'anneau 4 de la sonde 2 de palpage se trouve plus éloigné de la pièce 5 à couper, lorsque la torche 1 est en position d'amorçage de la coupe (figure 3) que lorsque celle-ci est en position de travail, c'est-à-dire de coupe proprement dite (figure 2).

En effet, en position d'amorçage la distance d' entre l'anneau 4 et la pièce 5 est nettement supérieure à la distance d' entre l'anneau 4 et la pièce 5, en position de coupe.

Le mode de réalisation de la figure 2 présente un avantage incontestable par rapport au mode de réalisation de la figure 1, étant donné, dans le cas de la figure 2, que l'ensemble monobloc constitué par la sonde 2 capacitive, les tiges 17 et 18 et le boîtier 3 électronique forment un ensemble monobloc pouvant être déplacé sans faire varier l'équilibre des valeurs de capacité parasite.

Il est à noter qu'une installation selon la présente invention peut être munie de plusieurs chalumeaux ou torches, telles des torches de coupage laser ou plasma.

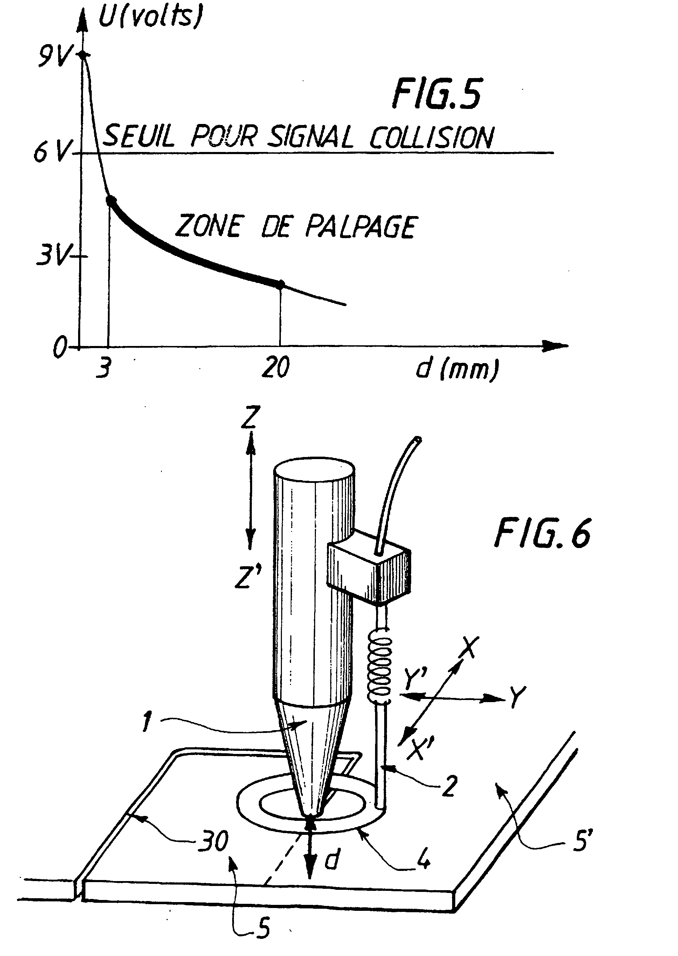

Les figures 4 et 5 illustrent, quant à elles, le principe de fonctionnement de la sonde 2 capacitive et du boîtier 3 électronique ou moyens de pilotage.

Ainsi que susmentionné, une sonde capacitive 2 est un organe de détection permettant de détecter la valeur de capacité dans l'espace situé entre l'anneau 4 de la sonde et la pièce 5 à travailler, cette valeur de capacité étant mesurée par le boîtier 3 électronique de contrôle, puis transformé en une donnée représentative de la tension électrique.

Ainsi que représenté sur la figure 5, on voit que l'image de la distance d séparant l'anneau 4 de la sonde 2 capacitive de la pièce 5 peut être représentée par une valeur de tension U (en volt) qui augmente lorsque la distance d (en mm) diminue.

On voit, sur la figure 5, que la tension U décroît de 9 volts à 2 volts, lorsque la distance d augmente progressivement de 0 à 20 mm.

Ainsi, pour une tension d'environ 5 volts, la distance d est d'environ 3 mm, alors que pour une tension de 2 volts, la distance d est d'environ 20 mm, dans ce cas.

En d'autres termes, la tension électrique U varie en augmentant brutalement lorsque la distance d devient très petite.

Compte tenu de ce qui précède, il est également possible d'utiliser la forme géométrique et la position de la sonde 2 capacitive en tant que dispositif de détection de collision en plus de la fonction première de palpage.

En effet, durant une opération de coupage de pièce métallique, la torche de coupage se déplace habituellement dans un plan parallèle (x,x',y,y') à la tôle 5 à découper, et la distance d entre l'extrémité de la torche 1 de coupage, donc entre la sonde 2 et la tôle 5 à couper, est généralement comprise entre 5 et 20 mm selon la puissance devant être mise en oeuvre.

Une telle opération de coupage d'une pièce 5 au sein d'une tôle 5' de plus grandes dimensions, a été représentée sur la figure 6 où l'on voit une torche 1 de coupage réalisant une saignée 30 au sein de la tôle 5'.

Ladite torche 1 est maintenue à une distance d sensiblement constante de la tôle 5' grâce à un système de palpage comprenant une sonde capacitive 2 munie d'un anneau 4 terminal. Ce système de palpage est directement fixée sur le corps de torche 1 et se déplace avec ladite torche 1 dans le plan (x,x',y,y') ou verticalement selon l'axe (z,z').

On remarque que ce dispositif de palpage n'est pas selon l'invention, puisque dans la figure 6 il n'y a pas de deuxième moyen de connection.

Immédiatement après avoir été coupées, les pièces 5 peuvent ne pas rester immobiles et basculer brutalement sur le support ou la table de découpe, avant que le dispositif de palpage 2, 4 n'ait eu le temps de reculer la torche 1.

Il peut alors s'ensuivre des collisions entre la torche 1 et/ou la sonde 2, 4 et la pièce 5 lors de son basculement, lesquelles collisions sont préjudiciables à la torche 1 et/ou à la sonde et susceptibles d'entraîner un arrêt intempestif de l'installation, un coût de la réparation et des pertes de productivité.

Pour y remédier, il est possible d'utiliser la sonde 2 capacitive en tant que système de détection de collision entre la torche 1 et la sonde 2, d'une part, et la tôle 5 ou les pièces à couper, d'autre part.

Pour ce faire, on peut programmer, au niveau du boîtier électronique 3 de mesure, un seuil de collision d'une valeur de tension U prédéterminée, par exemple égale à 6 volts.

Alors, en cas de contact de la sonde 2 avec une pièce 5 à couper, la tension va passer brutalement de la valeur de travail, par exemple environ 3 volts à la valeur de contact, c'est-à-dire environ 9 volts, et déclencher le signal de collision, lequel signal de collision va immédiatement être exploité par le boîtier électronique 3 pour stopper le mouvement des outils et éviter ainsi leur détérioration.

Pour ce faire, il suffit de rajouter une carte électronique dans le boîtier électronique de commande 3.

Dans ce cas, la sonde capacitive remplie deux fonctions, à savoir la fonction de capteur de palpage en début et pendant l'opération de coupage et la fonction de capteur de collision en fin d'opération de coupage.

## Revendications

1. Installation de travail, en particulier de coupage ou soudage, d'au moins une pièce métallique, comprenant:
- au moins un bâti-support fixe muni d'au moins une torche (1) de travail mobile;
- au moins un dispositif de palpage (2, 3, 4) comportant au moins une sonde capacitive (2, 4) et des moyens de pilotage (3);
- un premier moyen de connexion (7, 17) longiligne et électriquement conducteur connecté par son extrémité amont (7", 17") auxdits moyens de pilotage (3) et par une extrémité aval (7', 17') à ladite sonde capacitive (2,4), **caractérisée en ce qu'**elle comporte, en outre, :
- un deuxième moyen de connexion (8, 18) longiligne et électriquement conducteur, connecté par son extrémité amont (8", 18") auxdits moyens de pilotage (3) et dont l'extrémité aval (8', 18') est libre.

2. Installation selon la revendication 1, **caractérisée en ce que** lesdits premier (7, 17) et deuxième (8, 18) moyens de connexion présentent des propriétés diélectriques respectives sensiblement identiques, de préférence lesdits premier (7, 17) et deuxième (8, 18) moyens de connexion sont constitués d'un même matériau et/ou ont une même section.

3. Installation selon l'une des revendications 1 ou 2, **caractérisée en ce que** le premier moyen de connexion (7, 17) a une première longueur (L1) et le deuxième moyen (8, 18) de connexion a une deuxième longueur (L2), lesdites première et deuxième longueurs (L1, L2) étant sensiblement égales.

4. Installation selon la revendication 3, **caractérisée en ce que** les première et deuxième longueurs (L1, L2) sont comprise entre 20 cm et 150 cm.

5. Installation selon l'une des revendications 1 à 4, **caractérisée en ce que** les premier (7, 17) et deuxième (8, 18) moyens de connexion sont séparés d'une distance d comprise entre 2 mm et 50 mm, de préférence de l'ordre de 30 mm.

6. Installation selon l'une des revendications 1 à 5, **caractérisée en ce que** les premier (7, 17) et deuxième (8, 18) moyens de connexion sont choisis parmi les câbles et les tiges métalliques, de préférence les premier (7, 17) et deuxième (8, 18) moyens de connexion sont deux tiges métalliques parallèles et de même longueur.

7. Installation selon l'une des revendications 1 à 6, **caractérisée en ce qu'**au moins une partie desdits premier (7, 17) et deuxième (8, 18) moyens de connexion est placée à l'intérieur d'une enveloppe (19) de protection, de préférence un tube métallique de protection.

8. Installation selon l'une des revendications 1 à 7, **caractérisée en ce que** la sonde capacitive (2, 4) est fixée à la torche (1) de travail, de préférence par l'intermédiaire d'une articulation (6, 20) ou d'une pièce flexible.

9. Installation selon d'une des revendications 1 à 8, **caractérisée en ce que** la torche (1) est choisie parmi les torches de coupage laser, les torches de coupage plasma ou les chalumeaux d'oxycoupage.

## Patentansprüche

1. Anlage zur Bearbeitung, insbesondere zum Schneiden und Schweißen, zumindest eines metallischen Werkstücks mit:
- zumindest einem festen Traggestell, das mit zumindest einem beweglichen Bearbeitungsbrenner (1) versehen ist,
- zumindest einer Abtastvorrichtung (2, 3, 4) mit zumindest einem kapazitiven Sensor (2, 4) und Steuermitteln (3);
- einem langgliedrigen und elektrisch leitenden ersten Verbindungsmittel (7, 17), das an seinem stromaufwärtigen Ende (7'', 17'') mit den Steuermitteln (3) verbunden ist, und seinem stromabwärtigen Ende (7', 17') mit dem kapazitiven Sensor (2, 4) verbunden ist,
**dadurch gekennzeichnet, dass** sie außerdem ein langgliedriges und elektrisch leitendes zweites Verbindungsmittel (8, .18) umfasst, das an seinem stromaufwärtigen Ende (8'', 18'') mit den Steuermitteln (3) verbunden ist und dessen stromabwärtiges Ende (8', 18') frei ist.

2. Anlage nach Anspruch 1, **dadurch gekennzeichnet, dass** das erste (7, 17) und zweite (8, 18) Verbindungsmittel jeweils im Wesentlichen identische dielektrische Eigenschaften aufweisen, wobei das erste (7, 17) und zweite (8, 18) Verbindungsmittel vorzugsweise aus dem gleichen Material bestehen und/oder den gleichen Querschnitt aufweisen.

3. Anlage nach einem der Ansprüche 1 oder 2, **dadurch gekennzeichnet, dass** das erste (7, 17) Verbindungsmittel eine erste Länge (L1) und das zweite (8, 18) Verbindungsmittel eine zweite Länge (L2) aufweist, die im Wesentlichen gleich sind.

4. Anlage nach Anspruch 3, **dadurch gekennzeichnet, dass** die erste und zweite Länge (L1, L2) zwischen 20 cm und 150 cm liegen.

5. Anlage nach einem der Ansprüche 1 bis 4, **dadurch gekennzeichnet, dass** das erste (7, 17) und zweite (8, 18) Verbindungsmittel durch einen Abstand d getrennt sind, der zwischen 2 mm und 50 mm liegt und vorzugsweise in der Größenordnung von 30 mm liegt.

6. Anlage nach einem der Ansprüche 1 bis 5, **dadurch gekennzeichnet, dass** für das erste (7, 17) und zweite (8, 18) als Verbindungsmittel Kabel oder Metallstangen gewählt werden, wobei das erste (7, 17) und zweite (8, 18) Verbindungsmittel vorzugsweise zwei parallele und gleich lange Metallstangen sind.

7. Anlage nach einem der Ansprüche 1 bis 6, **dadurch gekennzeichnet, dass** zumindest ein Teil des ersten (7, 17) und zweiten (8, 18) Verbindungsmittels im Inneren einer Schutzhülle (19), vorzugsweise eines Metallschutzrohrs, platziert ist.

8. Anlage nach einem der Ansprüche 1 bis 7, **dadurch gekennzeichnet, dass** der kapazitive Sensor (2, 4) an dem Bearbeitungsbrenner (1) vorzugsweise mittels eines Gelenks (6, 20) oder eines beweglichen Teils befestigt wird.

9. Anlage nach einem der Ansprüche 1 bis 8, **dadurch gekennzeichnet, dass** als Brenner (1) ein Laserschneidbrenner, ein Plasmaschneidbrenner oder ein Sauerstoffschneidbrenner gewählt wird.

## Claims

1. Installation for the working, in particular the cutting or welding, of at least one metal workpiece, comprising:
- at least one stationary support frame provided with at least one moveable work torch (1);
- at least one sensing device (2, 3, 4) having at least one capacitive probe (2, 4) and control means (3);
- a first, long, thin and electrically conducting connection means (7, 17) connected via its upstream end (7'', 17'') to the said control means (3) and via its downstream end (7', 17') to the said capacitive probe (2, 4),
**characterized in that** it furthermore includes:
- a second long, thin and electrically conducting connection means (8, 18) connected via its upstream end (8'', 18'') to the said control means (3) and the downstream end (8', 18') of which is free.

2. Installation according to Claim 1, **characterized in that** the said first (7, 17) and second (8, 18) connection means have respective dielectric properties that are substantially identical, preferably the said first (7, 17) and second (8, 18) connection means are made of one and the same material and/or have one and the same cross section.

3. Installation according to either of Claims 1 and 2, **characterized in that** the first connection means (7, 17) has a first length (L1) and the second connection means (8, 18) has a second length (L2), the said first and second lengths (L1, L2) being substantially the same.

4. Installation according to Claim 3, **characterized in that** the first and second lengths (L1, L2) are between 20 cm and 150 cm.

5. Installation according to one of Claims 1 to 4, **characterized in that** the first (7, 17) and second (8, 18) connection means are separated by a distance d of between 2 mm and 50 mm, preferably around 30 mm.

6. Installation according to one of Claims 1 to 5, **characterized in that** the first (7, 17) and the second (8, 18) connection means are chosen from cables and metal rods, preferably the first (7, 17) and second (8, 18) connection means are two parallel metal rods of the same length.

7. Installation according to one of Claims 1 to 6, **characterized in that** at least one part of the said first (7, 17) and second (8, 18) connection means is placed inside a protective casing (19), preferably a metal protective tube.

8. Installation according to one of Claims 1 to 7, **characterized in that** the capacitive probe (2, 4) is fixed to the work torch (1), preferably by means of an articulation (6, 20) or of a flexible piece.

9. Installation according to one of Claims 1 to 8, **characterized in that** the torch (1) is chosen from laser cutting torches, plasma cutting torches or oxycutting torches.
